Europäisches Patentamt

European Patent Office

Office européen des brevets

(19)

(11) Publication number: **0 230 283 B1**

(12) **EUROPEAN PATENT SPECIFICATION**

(45) Date of publication of patent specification: **30.09.92**

(51) Int. Cl.5: **H04M 17/02**

(21) Application number: **87100489.1**

(22) Date of filing: **16.01.87**

(54) **Public telephone system and apparatus.**

(30) Priority: **21.01.86 IT 6704786**

(43) Date of publication of application:
**29.07.87 Bulletin 87/31**

(45) Publication of the grant of the patent:
**30.09.92 Bulletin 92/40**

(84) Designated Contracting States:
**BE CH DE ES FR GB LI**

(56) References cited:
**EP-A- 0 066 823**
**EP-A- 0 088 639**
**GB-A- 2 128 451**
**US-A- 4 199 659**
**US-A- 4 208 549**

**PATENT ABSTRACTS OF JAPAN, vol. 6, no. 123 (E-117)[1001], 8th July 1982 & JP-A-57 50 168**

(73) Proprietor: **URMET SUD S.p.A. Costruzioni Elettro-Telefoniche**
**Via di Castel Romano**
**I-00129 Roma(IT)**

(72) Inventor: **Mondardini, Massimo**
**Via Mazzini, 40**
**I-10100 Torino(IT)**

(74) Representative: **Modiano, Guido et al**
**c/o Modiano & Associati S.r.l. Via Meravigli, 16**
**I-20123 Milano(IT)**

Rank Xerox (UK) Business Services

## Description

The present invention relates to a pubic telephone system and apparatus, suitable for the insertion of telephonic terminals of various types, as well as for the insertion of telematic terminals.

In the present description, the term "telephonic terminal" defines the following:

- telephone sets with subscriber's meters for local and trunk-calls, commonly identified with the abbreviation Tx3c,
- token pay phones for local and trunk-calls, commonly identified with the abbreviation U + I,
- token and coin pay phones for local and trunk-calls, with dedicated raceways, commonly identified with the abbreviation G + M,
- token and/or coin pay phones for local and trunk-calls, with single raceway, commonly identified with the abbreviation U + I.P (so-called multiple),
- paycard (debit card) pay phones for local and trunk-calls, commonly identified with the abbreviation CDT,
- personal card (credit-card) pay phones for local and trunk-calls, commonly identified with the abbreviation CCT.

The term "telematic terminal" defines the following:

- intercommunicating PABX's
- teletex terminals,
- digital telephonic terminals,
- computers,
- facsimiles,
- information-wire terminals,

as well as, generally all the facilities given and provided for by the Integrated Service Digital Network (ISDN) system.

A public telephone system, preset for the connection of at least a plurality of telephonic terminals is already known from EP-0 066 823.

A public telephone system and apparatus, comprising a group of centralized logics operatively and bidirectionally connected to matching groups of telephonic terminals, are already known from Italian patent no. 1.078.601 by the same Applicant; said group of logics being controlled by a supervisor device.

According to this known system, the telephone set receives the tokens and/or the coins, counts them and transmits the credit data, together with the digits of the number being dialled, to the centralized logic.

The centralized logic, upon acquisition of the credit data, computes a collection algorithm which is a function of the dialled digits and transmits collection commands to the telephone set, the sequence of the commands being selectively determined by said algorithm. Each logic furthermore receives from the supervisor (located barycentrically with respect to the system) all the data which may be programmed and updated. In turn, the supervisor receives from the logics the statistical data related to the telephonic traffic and to the general alarms.

Each centralized logic is preset to control a group of ten repeaters, each of which interfaces with a matching telephone set.

In turn, the supervisor is preset to control a group of 64 logics (eight-wire bus, equivalent to $2^n$ combinations) so that the system, in its entirety, is preset for the optimum connection of 640 telephones. This number of controllable telephone sets, which derives directly from the architecture of the system, may cause some limitations. In fact, the system is rigid and is not economically advantageous on the one hand for application in small exchanges, and on the other hand for implementations with a small number of telephone sets in addition to the group of 640 which saturate such a system. In both cases, the installation or respectively the duplication of the system may in fact turn out to be excessively redundant. Furthermore, in said known system and apparatus, the centralized logics differ both circuitally and at the program level according to the type of the interfaced telephone set and are particularly complex in the case of telematic terminals and of paycard terminals, which furthermore require particular and expensive adaptations of the system at the centralized level.

The present invention is intended to eliminate the above described disadvantages and has the following further important objects:

- to provide an improved system and apparatus compatible with existing systems in which the improved apparatus may be integrated at the circuital (hardware) and program (software) level;
- to provide an improved system and apparatus, suitable for allowing a capillary diffusion of the terminals without penalizing the cost of each telephonic terminal of small systems with respect to the one of large systems;
- to provide a system and apparatus, improved as to reliability in operation, extremely flexible as to implementation of performances and services, as well as suitable for integration in future electronic exchanges.

In particular, the present invention has the important object of providing a system and a apparatus capable of controlling, in exchanges of any size and technology, with substantially levelled costs, all the known and foreseeable public telephone sets, as well as the telematic terminals of the type specified.

In order to achieve these important objects, and other which will become apparent from the following detailed description, the present invention relates to an improved public telephone system, as defined in the appended claims.

Therefore, according to the invention, the system comprises at least one system serial bus to which a plurality of modular process units is connected in parallel, each of which is intended for controlling at least one pair of specialized probes for connection to matchingly specialized telephonic and non-telephonic terminals; at least one modular process unit, acting as master with respect to the other units connected to the serial bus, said modular process unit being connected - via modem and switched or dedicated data-transmission line- to one or more remote control and/or supervision and/or data concentration centers.

In order to handle paycard (debit and credit card) telephone terminals or other telematic-type services, the system is provided with a second serial bus to which the modular process units are connected, together with at least one extended process memory storing data files related to specialized control of said terminals; said extended memory being provided with a microprocessor control logic which controls the modular process units connected to said second bus with a preset scanning pattern, preferably of the polling type with privileged dynamics.

Further characteristics and advantages of the invention will become apparent from the following description, with reference to the accompanying drawings, given by way of non-limitative example, in which:

- Fig. 1 is a general conceptual diagram of the system and of the apparatus according to the present invention;
- Fig. 2 is an electric block diagram illustrating the structure of the modular process units,
- Fig. 3 is an electric block diagram illustrating the basic structure of the specialized probe connecting a modular process unit to repeaters for U + I and Tx3c telephone sets.
- Fig. 4 is an electric block diagram of the specialized probe for direct connection of a modular process unit to G + M telephone sets,
- Fig. 5 is an electric block diagram illustrating the structure of the connecting means, via modem and via switched telephone line, of a modular process unit (master) to control and/or supervision and/or data concentration centers,
- Fig. 6 is a conceptual block diagram of an extended process memory for specialized control of debit-card and credit-card telephone terminals.

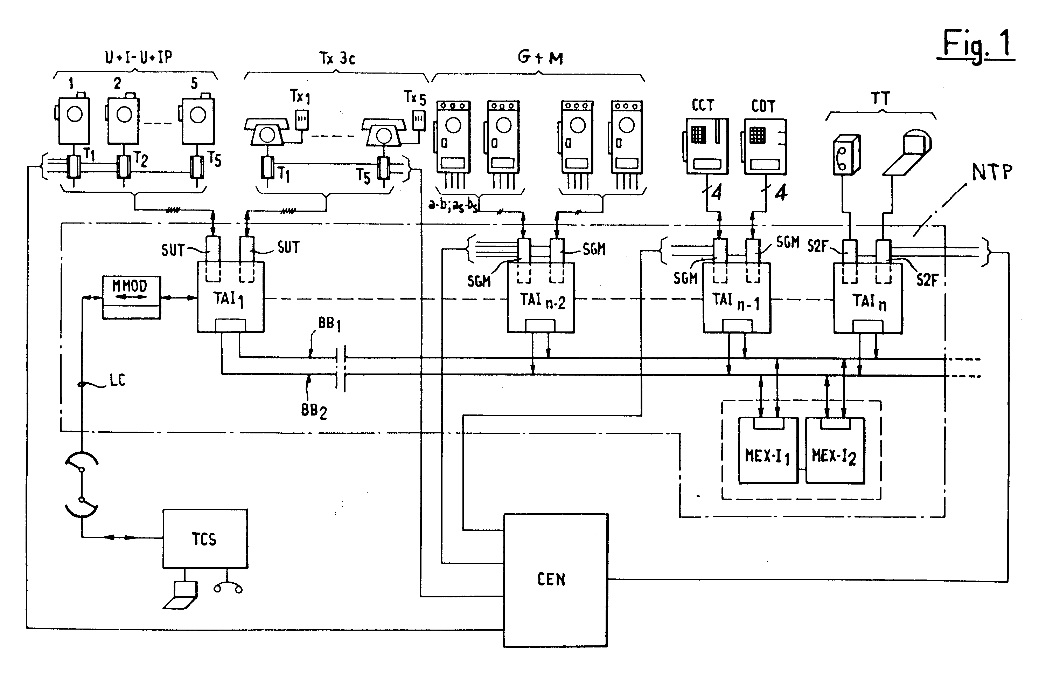

First with reference to Fig.1, CEN indicates the telephone exchange, and NTP generally indicates the apparatus of the system according to the present invention.

According to the invention, the apparatus comprises, located in a centralized region, a plurality of modular process units, TAI1...TAIn which are connected in parallel to at least one serial bus interconnecting these process units for the functions which will be specified hereinafter.

In the illustrated example, the system and the apparatus are preset for controlling terminals of different kinds and are therefore provided with a first and a second serial bus BB1, BB2 interconnecting, besides the modular process units TA1, a pair of extended process memories MEX-I1, 2 which will be described hereinafter.

Each modular unit TAI has a microprocessor to provide the following system functions:
- communication connection
- control of analog signals to and from the terminal
- operativity control

and is furthermore provided with non-volatile memories and with RAMs, the first being suitable to store the system parameters and tables, the second being suitable to store the data related to the counters of the terminals being controlled and the application programs.

The parallel connection on the serial bus BB1 allows, among other things, reloading and initializing of one or more modular units TAI subsequent to possible dropouts due to power failures or due to generic disabling events.

For this purpose, if the system is provided with a plurality of modular units TAI, one of said units may act as master with respect to the remaining ones and the programs to be reloaded are taken therefrom. The modular unit acting as master is also connected, via a modem unit MMOD and a switched line LC, to a per se known remote center TCS, acting as a loading center. The unit MMOD, besides acting as a modem, is also provided with its own memories to store, as will be specified hereinafter, a copy of the counters stored in the modular units TAI.

Each modular processing unit TAI is connected to a group of telephone or telematic terminals through a pair of specialized transfer modules, hereinafter termed probes, the nature of which varies according to the type of terminal connected thereto. In the present description, the following three types of probe are considered:
- SUT: constitutes the interface between each modular process unit TAI and the repeaters T1...T5 of the telephone sets of the U + I, Tx3c and U + I.P types. Each SUT probe is designed so as to interface five telephone sets freely selected among the three above specified types;

- SGM: constitutes the repeater module for the telephone sets of the G + M, CDT and CCT types. Each probe SGM is designed so as to control two sets by means of two pairs of leads a, b; a$^s$, b$^s$ respectively for audio and signal transmission;
- S2F: comprises any module suitable for controlling, by means of only two wires, generic telematic terminals and public telephone sets, e.g. with a control microprocessor.

Having described the general architecture of the system and of the apparatus according to the present invention, the description of the modular units and of the probes constituting the present system will be carried out hereinafter.

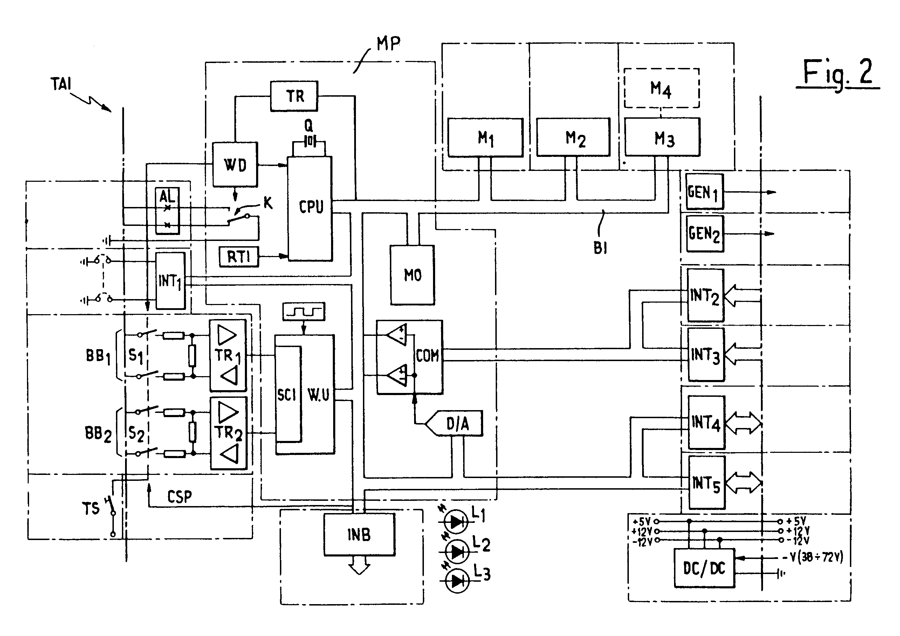

A) - Modular processing unit TAI (Fig.2)

This is a microprocessor unit which besides to the usual computing functions, performs communications functions, analog signal handling functions, non-volatile data storage and control functions. With reference to the accompanying circuit block diagram:

MP indicates the microprocessor in its entirety. In this microprocessor, the following functional blocks are integrated:

- CPU, preferably of the 16-bit type, associated with a programmable timing circuit RTI (Real Time Interrupt) for controlling periodic operations by means of programmed interrupts. A quartz Q, at 8 MHz, controls the processing speed of the CPU.
- An alarm (watchdog) circuit WD for controlling the correct operation of the CPU which, during normal activity, produces, by means of the block TR, retrigger of the alarm circuit. If not retriggered, the circuit WD, by means of change-over switch K, activates an alarm AL towards the exchange and, simultaneously, by means of circuit breakers S1, S2, causes the disconnection of the unit TAI from the bus(es) BB1, BB2. The circuit insulation from the two buses may also be program effected by a direct CSP command in the case of diagnostics, as will be specified hereinafter, or by manual command by means of a circuit-breaking key TS. The same key TS can be used at the moment of installation of a generic TAI module to perform an on-board validation of the functionality of the module itself.
- Comparison circuits COM and analog to digital and vice versa converters D/A. These allow fast processing, by the CPU, of the telephonic criteria originating via interfaces INT2...INT5, from the SUT-type probes, or of activation commands originating from, and directed to, the four-lead type probes SGM.
- Non-volatile memory MO. This is a memory module (512 byte) integrated into the microprocessor and suitable for storing the data in case of power failure.
- Communication circuits SCI and selection circuits WV. These allow control of the system bus in multidrop mode. The communication circuit SCI is suitable for recognizing the presence, on the system bus, of messages addressed to the generic unit TAI being considered, allowing the reception thereof. The selection circuit WU (wake up), conversely, identifies any other message with a different address as not addressed to the generic TAI being considered, allowing its passage on the system bus BB1, BB2. The CPU, by means of an internal data and address bus BI, is connected to a set of three memory banks M1, M2, M3, for collaboration therewith. The first bank M1 is composed of an EPROM containing the programs of the time-invariant type such as: executive; bus and communications line control; boot-strapping; diagnostics. The second bank M2, composed of a RAM, is the work memory of the operating system, and stores the work data, the counters and the system data. The third memory bank M3, composed of an EPROM, stores the updatable programs for controlling the probes which interface the terminals. This bank may be composed of a RAM M4 rather than by an EPROM. In the first case (use of an EPROM), any updating of the programs and/or tables entails a manual intervention for replacing the component, which is inserted removable on a socket. If a RAM is used, updating may be carried out by remote loading by means of the MMOD and the centralized system TCS, or with local means.

The diagram of Fig. 2 furthermore illustrates the "transceiver" buffers TR1, TR2 of the two system buses BB1, BB2, with the related protections; the additional interface of the system bus INT1 towards the MMOD module, a first tone generator GEN1 suitable for generating, towards the telephone set (terminal), the exchange tone at 425Hz (free-engaged); a second tone generator GEN2 at 1000 Hz, generating the beep tone for end-of-credit, the interface INB for extending, towards the probes, the internal data and address bus BI.

Finally, each unit TAI is provided with an autonomous power supply DC/DC suitable for feeding also the probe modules, and with a group of three optical indicators L1, L2, L3 respectively for operativity, major alert and minor alert.

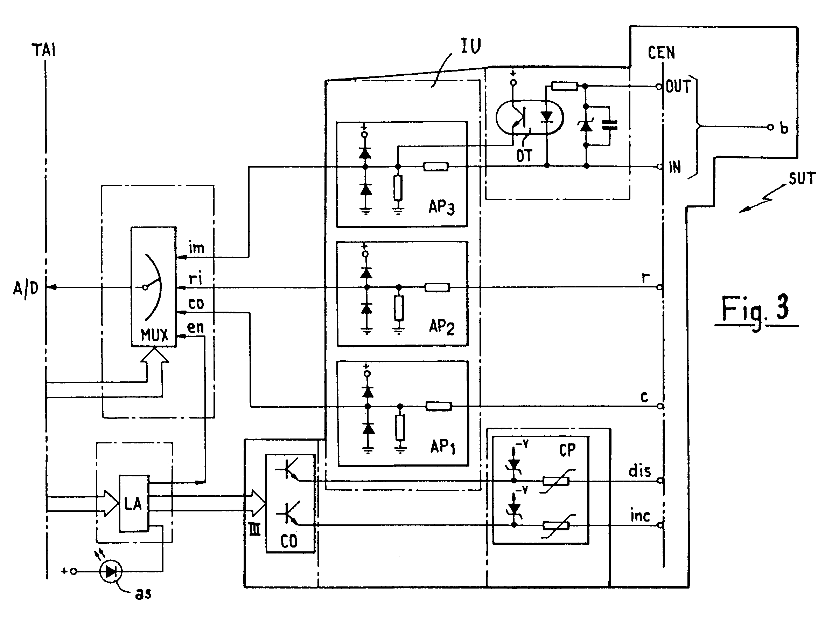

## B) Probe SUT (Fig. 3)

This constitutes the connection interface between the modular unit TAI and the known repeaters T1...T5 for telephone sets of the U+I, U+IP and Tx3c types. Each SUT probe mutiplexes five interface units, indicated at IU in Fig. 3, each connecting one telephone set of the indicated type to the TAI unit and being enabled by a common analog multiplexer MUX and associated latch LA. Fig. 3, for the sake of simplicity in illustration, depicts only one of these interface units, which however in the practical implementation are physically repeated five times on each module SUT. Naturally, the fivefold provision is not limitative, since it depends on a mere design choice. Each interface unit IU is enabled in sequence by an enable signal en stored in the latch register LA of the unit TAI. The command en sets the analog multiplexer MUX so as to enable the selected interface. The multiplexer MUX receives the counter co, check ri and engagement im signals arriving from the corresponding terminal, via a repeater T, on the leads c, r and b. All the signals are filtered by related attenuation and protection circuits AP1-AP3. The engagement signal is taken as a derivation on the audio lead b in electromechanical exchanges, serially in numeric exchanges. In the first case, the derivation enters the interface unit of the probe at the point IN and, filtered by the circuit AP3, reaches the multiplexer MUX. In the second case, the lead b is interrupted, the engagement signal enters at the point IN, returns onto the lead b from the point OUT after triggering an opto-isolator OT which allows the passage of an engagement signal reproduced towards the multiplexer MUX.

The latch LA furthermore stores commands coming from the modular unit TAI and actuating correspondent circuits CO which generate and send to the telephone set, through a protection circuit CP, the disconnection signal dis and collection signal inc. From the latch LA, furthermore, a command is issued which lights a luminous indicator as by means of which the modular unit TAI has the possibility of indicating a failure related to the SUT probe.

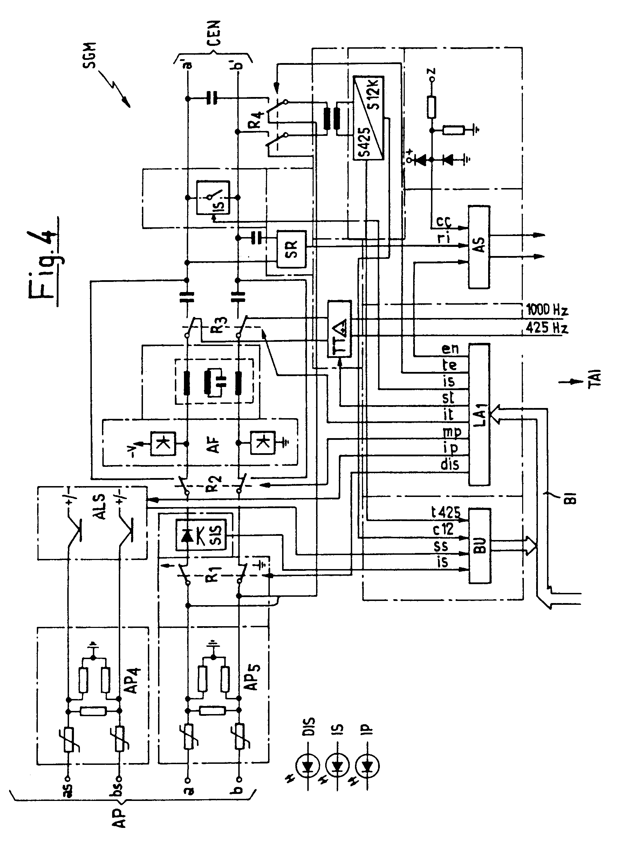

## C) Probe SGM (Fig. 4)

This probe comprises the repeaters for the telephone sets of the G+M, CCT and CDT types. Each probe is preferably structured for controlling two telephone sets, each set being connected to the probe by means of four leads: audio a, b and signalling $a^s$, $b^s$. Fig. 4, for sake of illustrative simplicity, illustrates schematically the circuitry related to only one repeater, which however in the practical implementation is physically repeated two (or more) times on the same probe.

The interface of the probe SGM towards the modular unit TAI is the same described previously for the module SUT; the two probes are thus interchangeable in the same rack (pin-to-pin compatibility) depending on the need to control, by means of the modular unit TAI, telephone sets of one kind of of the other.

The diagram illustrates the connection towards the exchange CEN on the right side; the connection towards the terminal (telephone set) AP on the left side and the commands and signals to and from the modular unit TAI (bottom). Towards the terminals, the pairs of leads a, b, as, bs for connection to the terminal are shown, both protected against overvoltages and shortcircuits by related protection circuits AP4, AP5. The engagement and selection criteria are taken on the lead a ; the signals originating from the terminal are taken from the leads as, bs. On the exchange side, the following signals are taken: the 425 Hz tone, the 12KHz counter or, alternatively, the DC count (from the lead z) as well as the ring signal.

By means of an analog switch AS, the ring signal ri, taken by means of a correspondent ring probe SR, and the DC count signal are sent to the modular unit TAI as analog signals. The switch AS is enabled by the same unit TAI by means of an enable command en stored in a latch LA1.

BU indicates a buffer register, connected to the interface INB for the extension of the internal bus of the unit TAI. In this buffer, the following data are stored to be sent to the unit TAI: selection engagement is originating from the correspondent probe SIS sensing the engagement condition; signals ss originating from a power supply and signalling circuit ALS connected to the leads as, bs; 12 KHz count c12 and 425 Hz tone t425 originating from corresponding probes S425, S12K which will be described hereinafter. From the modular unit TAI, by means of the extension of the internal bus BI and after storage in the latch LA1, the following actuation commands arrive for the correspondent circuits and components specified hereinafter:

- disconnection commands dis. This causes the drop of a connection relay R1 and therefore the isolation of the terminal in case of malfunction. This command can be inhibited by means of bridges on the relay contacts.
- polarity inversion command ip. This acts on the power supply and signalling circuit ALS to cause the polarity inversion on the leads as, bs for performing signalling towards the telephone set.
- "bypassing" command mp. This causes the drop of a relay R2 with the consequent shunting of part of the control and direct-connection circuitry of the terminal to the exchange in case of malfunction. The circuits shunted by the drop of the relay R2 are: audio supply AF towards the terminal and circuit TT transmitting the 425 Hz tone and 1000 Hz end-of-credit beep.

- tone transmission command it by means of which a relay R3 is closed, which inserts the circuit TT on the leads a, b. In this manner, the 425 Hz tone (free or engaged) and the end-of-credit signal are sent to the device depending on the frequency selected by the tone selection command.

- tone selection command st. It enables the passage of the 425 Hz tone or of the 1000 Hz end-of-credit signal.

- selection engagement command is. It controls a switch IS for opening and closing the line towards the exchange in order to cause engagement towards the exchange and to transmit the dialled digits.

- test command te. This allows, together with the other commands, the modular unit TAI to diagnose any possible malfunction of the relays provided in the probes SGM. In fact, this command causes the relay R4 to pick up, thereby allowing the connection of the tone probe S425 on the side of the telephone set. In this condition, the unit TAI, controlling the trasmission of the 425 Hz tone by means of the signal it from latch LA, can detect it via the buffer BU if the all the four relays are operative. If this is not the case, by controlling in succession the closure of the relays, the unit TAI may detect the failure of one or more thereof.

The probe is completed by four optical warning indicators for disconnection DIS, selection engagement IS and polarity inversion IP.

D) Probe S2F

It is suitable for the connection with units TAI of generic telematic terminals by means of only two wires. Its circuital structure may vary according to the terminal connected.

A probe S2F may in any case be defined by a generic and known MODEM having a serial/parallel interface UART also of a known kind, associated to the probe SGM described previously. This combination is not illustrated in detail since its specialized circuital structure is not within the scope of the protection of the present invention.

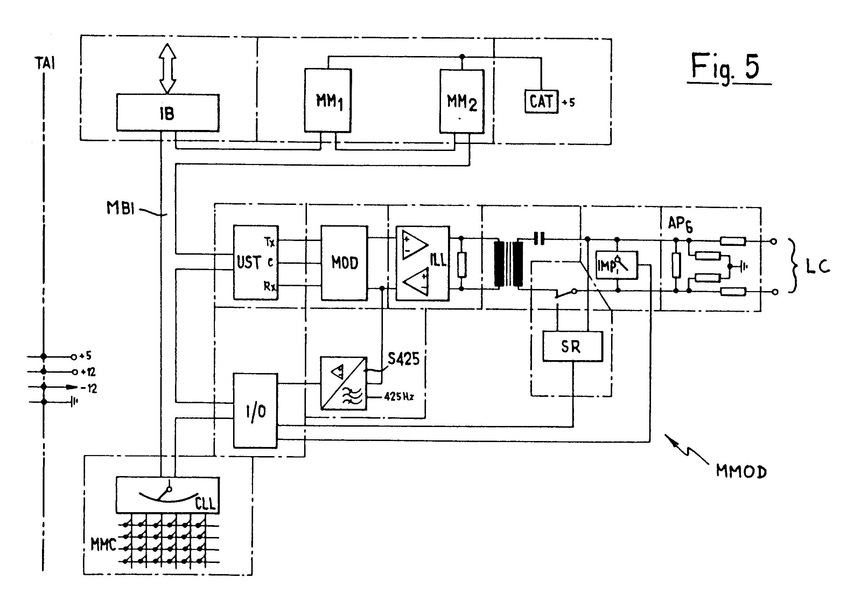

E) Module MMOD (Fig. 5)

This module comprises an internal bus MBI intended to connect, by means of an interface IB, to the bus of the microprocessor MP of the modular unit TAI (chosen as master) thereby defining by all means an extension of the bus of the microprocessor. On the internal bus MBI, two or more RAM memory banks MM1, MM2 are connected, which, in view of the bus MBI being interfaced with the modular unit, may be used for back-up of the data related to the counters present on the memories of the different units TAI which compose the system. These data are taken from the units TAI of the system with a continuous-scanning algorithm (polling). To maintain the data duplicated in the memories MM1, MM2, a buffer power supply circuit CAT is provided for keeping the same memories supplied with power - in case of power failure - for a period of time sufficient for the system recovery.

CLL indicates an interface read circuit capable of taking, from a cabled matrix MMC, a code cabled at system level, representing a telephone number related to a center which, by means of a switched line LC, is called automatically, if there are no program-tabled intervention telephone numbers or if the same are unusable. Connected to the switched line LC, a protection circuit AP6, an engagement and selection circuit IMP and, by means of a line interface ILL, a modem MOD, are arranged.

UST indicates a serial port connected to a modem MOD for reception, transmission and modem control.

To the internal bus MBI, an port block I/O is furthermore connected, from which, by means of a tone probe S425, the microprocessor of the unit TAI receives the exchange tone signal and, by means of a ring probe SR, the calling ring. By means of the same block I/O, the microprocessor can furthermore control the engagement and selection circuit IMP. The block MMOD furthermore takes the +5V and ±12V and ground power supplies from the TAI unit.

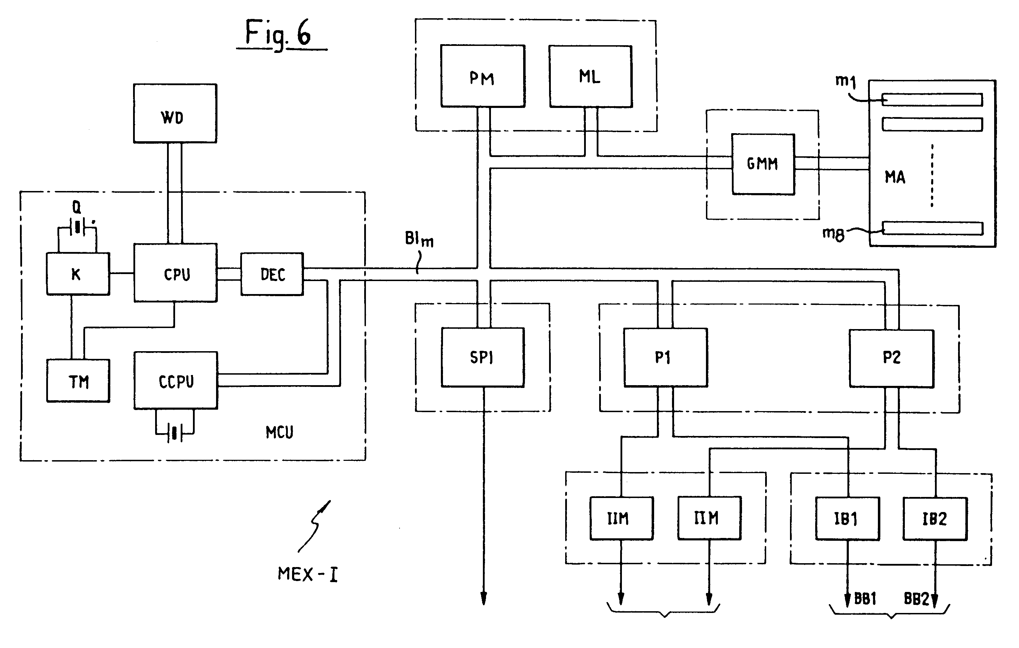

F) Extended Process Memory Unit MEX-I (Fig. 6)

The operations related to the debit and credit services CDT and, respectively, CCT require the local and online availability of data files containing:
- lists of disabled cards
- algorithms
- control parameters
- traffic data buffers

These functions are performed - in the system according to the present invention - by the unit MEX-I, preferably in duplicate, as indicated in fig. 1 at MEX-I1, MEX-I2, for reasons of service reliability.

All the operations related to the control of the credit-debit functions are driven by said unit MEX-I, the insertion of which activates the second serial bus BB2 preset for the exchange of the data related to said operations.

For this purpose, each unit MEX-I is provided with the following components:

- microprocessor control logic
- interface for connection with the pair of buses BB1, BB2
- memories containing the data related to the disabled credit cards and the algorithms for credit handling
- memories containing the data related to the disabled debit cards and the algorithms for debit handling
- memories containing the control programs
- traffic data buffer(s)

The unit MEX-I controls the group of the TAI units connected on the credit-debit bus BB2 according to a polling scanning with privileged dynamics.

According to this method, all the modular units TAI containing probes SGM for connection to CDT or CCT sets are scanned with a preset period such as to ensure a system response adequate to the external variations. As soon as an engagement criterion is recognized, the unit TAI sending such criterion is assigned to a group of privileged units with a higher scanning rate to ensure an adequate online response. At the end of the privileged or preferential condition, the above unit TAI returns to the normal polling level. For the accelerated polling and data exchange operations, the unit MEX-I employs the second bus BB2. If a failure disables the bus BB2, the unit MEX-I switches onto the first bus BB1, slowing down the operations of updating of the duplicated counters present on the module MMOD.

Fig. 6 illustrates the functional block diagram of the unit MEX-I and its connections to the other modular units of the system (TAI and MMOD) as well as to the duplicate unit MEX-I.

In the diagram, MCU indicates the microprocessor integrating the CPU, the decoder circuit DEC for decoding the addresses on the internal bus BIm, the clock K driven by a quartz Q at 8 MHz and a coprocessor CCPU capable of autonomously processing the cryptography algorithm according to the well-known DES (Data Encryption Standard). The coprocessor CCPU operates with a clock frequency of its own, e.g. at 10 MHz. The block MCU furthermore contains a timer TM with different levels (e.g. four) of interrupt programable with a preset base frequency, e.g. 2 ms.

Outside the microprocessor, a watchdog circuit WD is arranged to control the correct operation of the CPU.

The WD circuit is retriggered by the CPU. In the absence of a retrigger, this circuit activates an alarm which allows a role swap to be carried out between the two duplicate MEX-I units according to the well-known master/slave configuration.

The internal bus BIm is connected with the program memories PM of the EPROM type, the work memories ML of the RAM type and the file memories MA composed of banks (1 to 8) m1...m8 of dynamic RAMs. To each byte of the file memories, a parity bit is added which is automatically validated at every read/write operation. The file memory is preferably handled in "pages", having, e.g., a 32-Kbyte size. A circuit GGM automatically provides the logical/physical control in the overall space of the total bytes.

On the internal bus BIm, the various interfaces which allow the unit MEX-I to communicate with the outer environment are connected. SPI (Serial Programmable Interface) indicates the interface for connection to the modem module MMOD, IIM indicates the interfaces (two, for reasons of reliability) for the double connection of the units MEX-I, and IB1, IB2 indicate the interfaces for the connections to the system bus BB1, BB2. The interfaces IIM and IB1, IB2 are connected to the internal bus BIm through serial I/O ports P1, P2.

According to what has been described previously, the interface IB2 is normally active for the connection on the system bus BB2 and only in case of malfunction of this bus the interface IB1 is activated.

Naturally, within the inventive concept, the details of execution and the embodiments may be widely varied with respect to what has been described and illustrated by way of non-limitative example without thereby abandoning the scope of the invention.

## Claims

1. A public telephone system, preset for the connection of at least a plurality of telephonic terminals, characterized by: at least one system serial bus (BB1, BB2); a plurality of modular process units (TAI1...TAIn) parallel connected to said system serial bus, each of said modular process units being intended for controlling at least one pair of probes (SUT, SGM, S2F) specialized for the connection to matchingly specialized telephonic and non-telephonic terminals; at least one master modular process unit (TAI1), acting as master with respect to the other units connected to said serial bus, said master modular process unit (TAI1) being connected - via modem (MMOD) and switched or data-transmission dedicated telephone line (LC) - to one or more remote control and/or supervision and/or data concentration centers (TCS).

2. A public telephone system, according to claim 1, characterized in that each modular process unit (TAI1...TAIn) comprises a microprocessor (MP) to provide the following system functions:
  - connection with the associated terminal for communications
  - analog signal handling to and from the associated terminal
  - operativity control

as well as non-volatile memories (M1, M3) and RAMs (M2, M4), said non-volatile memories being suitable to store the system parameters and tables, and said RAMs being suitable to store the data related to the counters of the associated terminals and the application programs.

3. A public telephone system, according to claims 1 and 2, characterized in that the connection between the modular process units (TAI1...TAIn) and the telephonic and non-telephonic terminals (U + I, U + IP, Tx3c, G + M, CCT, CDT, TT) is provided with three different types of specialized probes (SUT, SGM, S2F), said different types of specialized probes having directly correspondent external connectors for connection to said module process units thereby being mutually interchangeable.

4. A public telephone system, according to claims 1 and 3, characterized in that a first type of probe (SUT) constitutes an interface between available telephonic repeaters (T1...T5) and a said modular process unit (TAI); a second type of probe (SGM) defines a repeater for telephone sets (G + M, CCT, CDT) having a two - audio and signal - lead pairs connection; a third type of probe (S2F) defining a repeater for telematic terminals and the telephone sets (TT) using connections with only two leads.

5. A public telephone system, according to claims 1, characterized in that said master modular process unit (TAI1) is connected to said remote control center (TCS) through a connection unit comprising a modem (MMOD) and a plurality of memories for storing a copy of the counters of each modular process unit (TAI1...TAIn).

6. A public telephone system, according to claim 1, characterized by a first (BB1) and a second (BB2) serial bus to which are parallel connected, besides said modular process units (TAI1..TAIn), duplicate extended process memories (MEX-I1, MEX-I2) which can be selectively activated for reliability and control paycard telephonic terminals.

7. A public telephone system, according to claim 6, characterized in that said extended process memories (MEX-I1, MEX-I2) comprise a microprocessor control logic (MCU) controlling said modular process units (TAI1...TAIn) when connected to said second serial bus (BB2) with a preset excursion and with privileged dynamics.

8. A public telephone system, according to claim 7, characterized in that said extended process memories (MEX-I1, MEX-I2) comprise data files stores (MM1, MM2) for lists of disabled cards or codes, control algorithms, control parameters and traffic data buffer(s).

9. A public telephone system, according to claims 6 to 8, characterized in that said second serial bus (BB2) is intended for the exchange of data processed by said extended process memories (MEX-I1, MEX-I2) and is activated by the insertion of the same.

10. An apparatus used in the public telephone system according to claims 1 to 9, characterized in that it comprises a plurality of modular process units (TAI1...TAIn) connected in parallel to at least one serial bus (BB1, BB2) and connected, by means of dedicated probes (SUT, SGM, S2F), to public telephonic and telematic terminals (U + I, U + IP, Tx3c, G + M, CCT, CDT, TT) controlled by the system; and in that each modular process unit comprises:
  - a microprocessor (MP) with an operativity validation control circuit (WD) of the watchdog type, sensitive to a retrigger command and producing an alarm towards the exchange (CEN) in the absence of said command,
  - a breaker element (S1, S2) for said serial bus (BB1, BB2), activated by said operativity validation control circuit (WD) and by program;
  - comparison circuits (COM, D/A) for analog to digital and vice versa convertion,
  - modular unit communication (SCI) and selection (WV) circuits, said communication circuit (SCI) being suitable for recognizing messages addressed to the associated unit, allowing the reception thereof, said selection circuit (WV) being intended for discarding any other message having a different address,
  - a set of memory banks (M1-M4) for the storage of operative programs, of counters, of system data and of updatable programs,

- a first and a second tone generator (GEN1, GEN2), respectively at 425 Hz for exchange tone and at 1000 Hz for end of credit,
- an interface (INB) for extension of an internal bus (BI),
- an autonomous power supply (DC/DC),
- optical operativity indicators (L1-L3),

wherein at least one modular process unit (TAI1), operating as a master with respect to the other modular process units (TAI2...TAIn), is connected - via modem (MMOD) and switched (LC) or data-transmission dedicated telephone line - to a remote data loading and concentration center (TCS).

11. An apparatus according to claim 10, characterized in that at least one modular process unit (TAI1) and one or more dedicated probes (SUT) associated therewith are provided for connection to telephone sets of the U + I, U + IP and Tx3c types.

12. An apparatus according to claim 11, characterized in that each dedicated probe (SUT) comprises a plurality of interface units (IU) for connection each to a matching telephone set, each said interface unit being selected by a multiplexer (MUX) according to a command of the associated modular process unit (TAI1...TAIn) as stored in a latch unit (LA) of said probe and in that said multiplexer receives an engagement signal (im) from an audio (b) connected in derivation in case of electromechanical exchanges, and in series in case of numeric exchanges.

13. An apparatus according to claim 12, characterized in that said series connection of said audio wire (b) comprises an opto-isolator (OT) for the passage towards said multiplexer (MUX) of a reproduced engagement signal.

14. An apparatus according to claim 10, characterized in that at least one modular process unit (TAIn-2, TAIn-1) and one or more dedicated probes (SGM) associated therewith are provided for connection to telephone sets of the G + M type.

15. An apparatus according to claim 14, characterized in that each dedicated probe (TAIn-2, TAIn-1) controls two telephone sets each by means of two pairs of wires, respectively audio (a, b) and signalling (a$^s$, b$^s$).

16. An apparatus according to claims 10, 14 and 15, characterized in that said dedicated probe (SGM) comprises:
- an analog switch (AS) enabled by said modular process unit (TAI) to transfer a ring signal (ri) thereto;
- an extension buffer (BU) for extending said internal bus (BI) of said modular process unit to thereby storing and sending to said modular process unit the following data: selection engagement (is), signalling (ss), counting (C12) and tone t425),
- a latch (LA1) receiving from said modular process unit, the following commands: disconnection (dis), polarity inversion (ip), bypassing (mp), tone transmission (it), tone selection (st), selection engagement (is) and test command (te).

17. An apparatus according to claims 14 to 16, characterized in that said dedicated probe (SGM) comprises a set of three relays (R1-R3), respectively for connection, bypassing shunt and insertion of the tone-generating circuit.

18. An apparatus according to claim 10, characterized in that at least one modular process unit (TAIn) and one or more dedicated probes (S2f) associated therewith are provided for the connection, on two wires, of matching telematic terminals (TT).

19. An apparatus according to claim 18, characterized in that said dedicated probe (tain) comprises at least one modem including a serial/parallel UART port.

20. An apparatus according to claim 10, characterized in that said modular process unit acting as a master (TAI1) is connected with said remote control and/or supervision and/or data concentration center (CEN) through connection means (MMOD) including an internal bus (MBI) connected through an interface (IB) to said internal bus (BI) of said modular process unit and defining an extension thereto and memory banks (MM1, MM2) connected to said internal bus (MBI) of said connection means (MMOD) for duplication of data of said modular process units (TAI1...TAIn), in particular of the counters; said data being taken from said modular units through a continuous-polling scanning algorithm.

21. An apparatus according to claim 20, characterized in that said connection means (MMOD) comprises a cabled matrix (MMC) permanently storing an intervention telephone number for alarms and a read interface (CLL) for said cabled matrix.

22. An apparatus according to claims 20 and 21, characterized in that said connection means (MMOD) further comprise a telephone line (LC) connected, through a line interface (ILL), to a modem (MOD) cooperating with a serial control port (UST).

23. An apparatus according to claims 20 to 22, characterized in that on said telephone line (LC) a selection engagement circuit (IMP), a ring probe (SR) and a tone probe (S425) are inserted and connected to said internal bus (MBI) of said connection means (MMOD) through an input/output port (I/O).

24. An apparatus according to claims 10 to 14, characterized in that said dedicated probes (SGM) provided for connection to telephone sets of the G + M type are also suitable for controlling paycard - credit card and debit card - telephone sets (CCT, CDT), in that said modular process units (TAI1...TAIn) are connected to two system buses (BB1, BB2) and in that at least one extended process memory (MEX-I1, MEX-I2) is also connected to said two system buses.

25. An apparatus according to claim 24, characterized in that is comprises two extended process memories (MEX-I1, MEX-I2) interconnected in master/slave mode.

26. An apparatus according to claims 24 and 25, characterized in that each extended process memory (MEX-I1, MEX-I2) comprises:
   - a microprocessor control logic (MCU),
   - an interface (IB1, IB2) for connection with said two system buses (BB1, BB2),
   - memories (MA) containing the data related to the disabled credit and debit cards and the credit and debit control algorithms,
   - memories (PM, ML) containing the control programs,
   - traffic data buffer(s) (SPI, IIM, P1, P2).

27. An apparatus according to claim 26, characterized in that said microprocessor control logic (MCU) comprises a coprocessor (CCPU) for processing a cryptography algorithm and a timer (TM) with different levels of programable interrupts.

28. An apparatus according to claims 24 to 27, characterized in that each extended process memory (MEX-I1, MEX-I2) comprises file memory banks (MA) composed of dynamic RAMs and in that said file memories are handled in "pages".

29. An apparatus according to claims 10, 24 to 28, characterized in that each extended process memory (MEX-I1, MEX-I2) comprises a serial programmable interface (SPI) for connection to said connection means modem (MMOD) and thereby to said control and/or supervision and/or data concentration center.

**Patentansprüche**

1. Öffentliches Telefonsystem, voreingestellt für die Verbindung mindestens einer Vielzahl von Telefonanschlüssen, gekennzeichnet durch: mindestens einen seriellen Systembus (BB1, BB2); eine Vielzahl von modularen Prozeßeinheiten (TAI1...TAIn) parallel verbunden mit dem seriellen Systembus, wobei jede der modularen Prozeßeinheiten zum Steuern mindestens eines Paars von Sonden (SUT, SGM, S2F) bestimmt ist, die für die Verbindung mit übereinstimmend spezialisierten Telefon- und Nichttelefon-Anschlüssen spezialisiert sind; mindestens eine modulare Master-Prozeßeinheit (TAI1), die als Master gegenüber den anderen mit dem seriellen Bus verbundenen Einheiten wirkt, wobei die modulare Master-Prozeßeinheit (TAI1) - über ein Modem (MMOD) und geschaltete oder dedizierte Datenübertragungs-Telefonleitungen (LC) - mit einem oder mehreren ortsfesten Steuer- und/oder Aufsichts- und/oder Datenkonzentrierungszentren (TCS) verbunden ist.

2. Öffentliches Telefonsystem nach Anspruch 1, dadurch gekennzeichnet, daß jede modulare Prozeßeinheit (TAI1...TAIn) einen Mikroprozessor (MP) zur Schaffung der folgenden Systemfunktionen enthält:
   - Verbindung mit dem zugeordneten Anschluß für Verbindungen
   - Analog-Signalbehandlung für und von dem zugeordneten Anschluß
   - Betriebssteuerung
   sowie nichtflüchtige Speicher (MI, M3) und RAMs (M2, M4), wobei die nichtflüchtigen Speicher zum Abspeichern der Systemparameter und Tabellen und die RAMs zum Abspeichern der sich auf die Zähler der zugeordneten Anschlüsse beziehenden Daten und der Anwendungsprogramme geeignet sind.

3. Öffentliches Telefonsystem nach Anspruch 1 oder 2, dadurch gekennzeichnet, daß die Verbindung zwischen den modularen Prozeßeinheiten (TAI1...TAIn) und den telefonischen und nichttelefonischen Anschlüssen (U + I, U + IP, Tx3c, G + M, CCT, CDT, TT) mit drei verschiedenen Arten spezialisierter Sonden (SUT, SGM, S2F) versehen ist, wobei die verschiedenen Arten spezialisierter Sonden direkt entsprechende äußere Verbinder zur Verbindung mit den modularen Prozeßeinheiten aufweisen und daher wechselseitig austauschbar sind.

4. Öffentliches Telefonsystem nach Anspruch 1 und 3, dadurch gekennzeichnet, daß eine erste Art von Sonde (SUT) eine Schnittstelle zwischen zur Verfügung stehenden Telefonwiederholern (T1...T5) und der modularen Prozeßeinheit (TAI) bildet, daß eine zweite Art von Sonde (SGM) einen Wiederholer für Fernsprechapparate (G + M, CCT, CDT) mit einer Zwei-Leitungspaarverbindung - Audio und Signal - bildet, und daß eine dritte Art von Sonde (S2F) einen Wiederholer für Telematik-Anschlüsse und die Telefonapparate (TT) bildet, die Verbindungen mit nur zwei Leitungen verwenden.

5. Öffentliches Telefonsystem nach Anspruch 1, dadurch gekennzeichnet, daß die modulare Master-Prozeßeinheit (TAI1) mit dem ortsfernen Steuerzentrum (TCS) durch eine Verbindungseinheit verbunden ist, die ein Modem (MMOD) und eine Vielzahl von Speichern zum Abspeichern einer Kopie der Zähler jeder modularen Prozeßeinheit (TAI1...TAIn) aufweist.

6. Öffentliches Telefonsystem nach Anspruch 1, gekennzeichnet durch einen ersten (BB1) und einen zweiten (BB2) seriellen Bus, mit dem neben den modularen Prozeßeinheiten (TAI1...TAIn) Zweitexemplare von vergrößerten Prozeßspeichern (MEX-I1, MEX-I2) parallel verbunden sind, die selektiv für die Zuverlässigkeit aktiviert werden können und Telefonanschlüsse mit Telefonkarten steuern.

7. Öffentliches Telefonsystem nach Anspruch 6, dadurch gekennzeichnet, daß die vergrößerten Prozeßspeicher (MEX-I1, MEX-I2) eine Mikroprozessor-Steuerlogik (MCU) aufweisen, die die modularen Prozeßeinheiten (TAI1... TAIn) steuern, wenn sie mit dem zweiten seriellen Bus (BB2) mit einer voreingestellten Exkursion und mit bevorrechtigten dynamischen Verhalten verbunden sind.

8. Öffentliches Telefonsystem nach Anspruch 7, dadurch gekennzeichnet, daß die vergrößerten Prozeßspeicher (MEX-I1, MEX-I2) Dateispeicher (MM1, MM2) für Listen von für ungültig erklärten Telefonkarten oder Codes, Steueralgorithmen, Steuerparameter und Verkehrsdatenpuffer aufweisen.

9. Öffentliches Telefonsystem nach Ansprüchen 6 bis 8, dadurch gekennzeichnet, daß der zweite serielle Bus (BB2) für den Austausch von bearbeiteten Daten mit den vergrößerten Prozeßspeichern (MEX-I1, MEX-I2) bestimmt ist und durch deren Einsetzung aktiviert wird.

10. In dem öffentlichen Telefonsystem nach den Ansprüchen 1 bis 9 verwendete Vorrichtung, dadurch gekennzeichnet, daß sie eine Vielzahl modularer Prozeßeinheiten (TAI1...TAIn) aufweist, die parallel mit mindestens einem seriellen Bus (BB1, BB2) verbunden und mit Hilfe von dedizierten Sonden (SUT, SGM, S2F) mit öffentlichen Telefon- und Telematik-Anschlüssen (U + I, U + IP, Tx3c, G + M, CCT, CDT, TT) verbunden sind, die von dem System gesteuert werden, und daß jede modulare Prozeßeinheit enthält:
- einen Mikroprozessor (MP) mit einer Betriebsprüfungs-Steuerschaltung (WD) vom Wachhund-Typ, ansprechend auf einen Rücksetzbefehl und beim Fehlen des Befehls einen Alarm in Richtung auf die Vermittlung CEN) erzeugend,
- ein Unterbrecherelement (S1, S2) für den seriellen Bus (BB1, BB2), aktiviert von der Betriebsprüfungs-Steuerschaltung (WD) und durch eine Programm;
- Vergleichsschaltungen (COM, D/A) für die Umwandlung von analog nach digital und umgekehrt,
- modulare Einheitsverbindungs- (SCI) und Auswahl(WV)-Schaltungen, wobei die Verbindungsschaltung (SCI) zum Erkennen von an die zugeordnete Einheit adressierten Botschaften geeignet ist und deren Empfang erlaubt und wobei die Auswahlschaltung (WV) zum Aussondern jeder anderen Meldung mit einer verschiedenen Adresse bestimmt ist,
- einen Satz von Speicherbänken (M1-M4) für die Speicherung von Betriebsprogrammen, von Zählern, von Systemdaten und von erneuerbaren Programmen,
- einen ersten und einen zweiten Tongenerator (GEN1, GEN2) bei 425 Hz für den Wählton bzw. bei 1000 Hz für das Ende des Kredits,
- eine Schnittstelle (INB) zur Verlängerung eines internen Busses (BI),
- eine autonome Leistungsversorgung (DC/DC),

- optische Betriebsanzeiger (L1-L3),

worin mindestens eine modulare Prozeßeinheit (TAI1), die als Master gegenüber den anderen modularen Prozeßeinheiten (TAI2...TAIn) arbeitet, über ein Modem (MMOD) und geschaltete (LC) oder dedizierte Datenübertragungs-Telefonleitungen mit einem ortsfernen Zentrum zum Datenladen und zum Konzentrieren verbunden ist.

11. Vorrichtung nach Anspruch 10, dadurch gekennzeichnet, daß mindestens eine modulare Prozeßeinheit (TAI1) und eine oder mehr dieser zugeordnete dedizierte Sonden (SUT) zur Verbindung mit Telefongeräten des U + I-, U + IP-und Tx3c-Typs vorgesehen sind.

12. Vorrichtung nach Anspruch 11, dadurch gekennzeichnet, daß jede dedizierte Sonde (SUT) eine Vielzahl von Schnittstelleneinheiten (IU) jeweils zur Verbindung mit einem übereinstimmenden Telefongerät aufweist, jede Schnittstelleneinheit von einem Multiplexer (MUX) entsprechend einem Befehl der zugeordneten modularen Prozeßeinheit (TAI1...TAIn) ausgewählt wird, wie in einer Latch-Einheit (LA) der Sonde gespeichert wird, und daß der Multiplexer ein Besetztsignal (im) von einem Audiodraht (b) empfängt, der in Umleitung im Falle elektromechanischer Vermittlungsstellen und in Reihe im Fall digitaler Vermittlungsstellen verbunden ist.

13. Vorrichtung nach Anspruch 12, dadurch gekennzeichnet, daß die Reihenverbindung des Audiodrahts (b) einen Opto-Isolator (OT) für den Durchgang eines reproduzierten Besetztsignals zu dem Multiplexer (MUX) aufweist.

14. Vorrichtung nach Anspruch 10, dadurch gekennzeichnet, daß mindestens eine modulare Prozeßeinheit (TAIn-2, TAIn-1) und eine oder mehr dieser zugeordnete dedizierte Sonden (SGM) zur Verbindung mit Telefonapparaten des G + M-Typs vorgesehen sind.

15. Vorrichtung nach Anspruch 14, dadurch gekennzeichnet, daß jede dedizierte Sonde (TAIn-2, TAIn-1) zwei Telefonapparate jeweils mit Hilfe zweier Paare von Drähten steuert, nämlich Audio- (a, b) und Signaldrähten (a$^s$, b$^s$).

16. Vorrichtung nach Anspruch 10, 14 und 15, dadurch gekennzeichnet, daß die dedizierte Sonde (SGM) enthält:
- einen Analogschalter (AS), der von der modularen Prozeßeinheit (TAI) zum Übertragen eines Anrufsignals (ri) eingeschaltet wird;
- einen Vergrößerungspuffer (BU) zum Vergrößern des internen Bus (BI) der modularen Prozeßeinheit, um dadurch die folgenden Daten zu speichern und zu der modularen Prozeßeinheit zu senden: Anwahl-Einschaltung (is), Signal (ss), Zählen (C12) und Ton (t425),
- einen Schalter (LA1), der von der modularen Prozeßeinheit die folgenden Befehle empfängt: Unterbrechung der Verbindung (dis), Polaritätsumkehrung (ip), Umgehung (mp), Tonübertragung (it), Tonauswahl (st), Auswahl-Anschaltung (is) und Testkommando (te).

17. Vorrichtung nach Ansprüche 14 bis 16, dadurch gekennzeichnet, daß die dedizierte Sonde (SGM) einen Satz von drei Relais (R1-R3) aufweist, für die Verbindung, die Umgehung bzw. das Einsetzen der tonerzeugenden Schaltung.

18. Vorrichtung nach Anspruch 10, dadurch gekennzeichnet, daß mindestens eine modulare Prozeßeinheit (TAIn) und eine oder mehr zugeordnete dedizierte Sonden (S2F) für die Verbindung auf zwei Drähten übereinstimmender Telematik-Anschlüsse (TT) vorgesehen sind.

19. Vorrichtung nach Anspruch 18, dadurch gekennzeichnet, daß die dedizierte Sonde (TAIn) mindestens ein Modem unter Einschluß eines seriellen/parallelen UART-Ports aufweist.

20. Vorrichtung nach Anspruch 10, dadurch gekennzeichnet, daß die als Master wirkende modulare Prozeßeinheit (TAI1) mit dem ortsfernen Steuer- und/oder Überwachungs-und/oder Datenkonzentrierungs-Zentrum (CEN) durch Verbindungsmittel (MMOD) verbunden ist, die einen internen Bus (MBI) aufweisen, der durch eine Schnittstelle (IB) mit dem internen Bus (BI) der modularen Prozeßeinheit verbunden ist und hierfür eine Verlängerung bildet, sowie mit dem internen Bus (MBI) der Verbindungsmittel (MMOD) verbundene Speicherbänke (MM1, MM2) zur Duplikatbildung von Daten der modularen Prozeßeinheiten (TAI1...TAIn), insbesondere der Zähler, wobei die Daten von den modularen Einheiten durch einen kontinuierlich abrufenden Abtastalgorithmus entnommen werden.

21. Vorrichtung nach Anspruch 20, dadurch gekennzeichnet, daß die Verbindungsmittel (MMOD) eine verkabelte Matrix (MMC) aufweisen, die permanent eine Interventions-Telefonnummer für Alarme und eine Leseschnittstelle (CLL) für die verkabelte Matrix aufweist.

22. Vorrichtung nach Anspruch 20 und 21, dadurch gekennzeichnet, daß die Verbindungsmittel (MMOD) weiterhin eine Telefonleitung (LC) aufweisen, die durch eine Leitungsschnittsstelle (ILL) mit einem mit einem seriellen Steueranschluß (UST) zusammenwirkenden Modem (MOD) verbunden ist.

23. Vorrichtung nach Ansprüchen 20 bis 22, dadurch gekennzeichnet, daß auf der Telefonleitung (LC) eine Wahleinschaltschaltung (IMP), eine Anwählsonde (SR) und eine Tonsonde (S425) eingesetzt werden und mit dem internen Bus (MBI) der Verbindungsmittel (MMOD) durch einen Eingangs-/Ausgangsanschluß (I/O) verbunden sind.

24. Vorrichtung nach Ansprüchen 10 und 14, dadurch gekennzeichnet, daß die zur Verbindung mit Telefonapparaten des G + M-Typs vorgesehenen dedizierten Sonden (SGM) ebenfalls zum Steuern von Telefongeräten (CCT, CDT) des Telefonkarten- und Kreditkartentyps geeignet sind, daß die modularen Prozeßeinheiten (TAI1...TAIn) mit zwei Systembussen (BB1, BB2) verbunden sind und daß mindestens ein vergrößerter Prozeßspeicher (MEX-I1, MEX-I2) ebenfalls mit den beiden Systembussen verbunden ist.

25. Vorrichtung nach Anspruch 24, dadurch gekennzeichnet, daß sie zwei vergrößerte Prozeßspeicher (MEX-I1, MEX-I2) aufweist, die in Master-Slave-Anordnung verbunden sind.

26. Vorrichtung nach Ansprüchen 24 und 25, dadurch gekennzeichnet, daß jeder vergrößerte Prozeßspeicher (MEX-I1, MEX-I2) enthält:
   - eine Mikroprozessor-Steuerlogik (MCU),
   - eine Schnittstelle (IB1, IB2) zur Verbindung mit den beiden Systembussen (BB1, BB2),
   - Speicher (MA), die die sich auf die für ungültig erklärten Kredit- und Telefonkarten beziehenden Daten und die Kredit- und Telefonkarten-Steueralgorithmen beziehenden Daten enthalten,
   - Speicher (PM, ML), die die Steuerprogramme enthalten,
   - Verkehrsdatenpuffer (SPI, IIM, P1, P2).

27. Vorrichtung nach Anspruch 26, dadurch gekennzeichnet, daß die Mikroprozessor-Steuerlogik (MCU) einen Coprozessor (CCPU) zum Verarbeiten eines kryptographischen Algorithmus und einen Zeitgeber (TM) mit verschiedenen Ebenen programmierbarer Interrupts aufweist.

28. Vorrichtung nach Ansprüchen 24 bis 27, dadurch gekennzeichnet, daß jeder vergrößerte Prozeßspeicher (MEX-I1, MEX-I2) aus dynamischen RAMs bestehende Dateien-Speicherbänke (MA) aufweist und daß die Dateienspeicher in "Seiten" behandelt werden.

29. Vorrichtung nach Ansprüchen 10 und 24 bis 28, dadurch gekennzeichnet, daß jeder vergrößerte Prozeßspeicher (MEX-I1, MEX-I2) eine serielle programmierbare Schnittstelle (SPI) zur Verbindung mit dem Verbindungsmittelmodem (MMOD) und daher mit dem Steuer- und/oder Überwachungs- und/oder Datenkonzentrations-Zentrum aufweist.

**Revendications**

1. Système de téléphone public prévu pour la connexion d'au moins une pluralité de postes téléphoniques, caractérisé par : au moins un bus sériel de système (BB1, BB2) ; une pluralité d'unités modulaires de traitement (TAI1...TAIn) connectées en parallèle audit bus sériel de système ; chacune desdites unités modulaires de traitement étant apte à commander au moins une paire de sondes (SUT, SGM, S2F) spécialisées pour la connexion de façon croisée à des postes téléphoniques et non téléphoniques spécialisés ; au moins une unité de traitement modulaire maître (TAI1), agissant en tant que maître par rapport aux autres unités connectées audit bus sériel, ladite unité de traitement modulaire maître (TAI1) étant connectée, par l'intermédiaire d'un modem (MMOD) et d'une ligne téléphonique (LC) commutée ou spécialisée dans la transmission de données, à un ou plusieurs centraux de commande à distance et/ou de supervision et/ou de concentration de données (TCS).

2. Système de téléphone public, selon la revendication 1, caractérisé en ce que chaque unité de traitement modulaire (TAI1...TAIn) comporte un microprocesseur (MP) pour assurer les fonctions de système suivantes :
   - connexion au poste associé pour des communications
   - traitement des signaux analogiques vers et en provenance du poste associé
   - commande d'exécution
   ainsi que des mémoires rémanentes (M1, M3) et des RAM (M2, M4), lesdites mémoires rémanentes étant aptes à mémoriser les paramètres de système et les tables, et lesdites RAM étant aptes à mémoriser les données associées aux compteurs des postes associés et aux programmes d'application.

3. Système de téléphone public, selon les revendications 1 et 2, caractérisé en ce que la connexion entre les unités de traitement modulaires (TAI1...TAIn) et les postes téléphoniques et non téléphoniques (U + I, U + IP, Tx3c, G + M, CCT, CDT, TT) est équipée de trois types différents de sondes spécialisées (SUT, SGM, S2F), les différents types de sondes spécialisées ayant des connecteurs extérieurs directement correspondants pour une connexion auxdites unités de traitement modulaires étant ainsi mutuellement interchangeables.

4. Système de téléphone public selon les revendications 1 à 3, caractérisé en ce qu'un premier type de sonde (SUT) constitue un interface entre des répéteurs téléphoniques disponibles (T1...T5) et l'une desdites unités de traitement modulaires (TAI) ; un second type de sonde (SGM) constitue un répéteur pour des appareils téléphoniques (G + M, CCT, CDT) ayant une connexion à deux paires de fils, audio et signalisation; un troisième type de sonde (S2F) constituant un répéteur pour des terminaux télématiques et les appareils téléphoniques (TT) utilisant des connexions à deux fils seulement.

5. Système de téléphone public selon la revendication 1, caractérisé en ce que ladite unité de traitement modulaire maître (TAI1) est connectée audit central de commande à distance (TCS) par l'intermédiaire d'une unité de connexion comportant un modem (MMOD) et une pluralité de mémoires pour mémoriser une copie des compteurs de chaque unité de traitement modulaire (TAI1...TAIn).

6. Système de téléphone public selon la revendication 1, caractérisé par un premier (BB1) et un second (BB2) bus sériels auxquels sont connectées en parallèle, en plus desdites unités de traitement modulaires (TAI1...TAIn), des mémoires de traitement étendues doubles (MEX-I1, MEX-I2) qui peuvent être activées sélectivement pour la fiabilité et la commande de postes téléphoniques à carte de paiement.

7. Système de téléphone public selon la revendication 6, caractérisé en ce que lesdites mémoires de traitement étendues (MEX-I1, MEX-I2) comportent une logique de commande de microprocesseur (MCU) commandant lesdites unités de traitement modulaires (TAI1...TAIn) lorsqu'elles sont connectées audit second bus sériel (BB2) avec une excursion prédéterminée et avec une dynamique privilégiée.

8. Système de téléphone public selon la revendication 7, caractérisé en ce que lesdites mémoires de traitement étendues (MEX-I1, MEXI2) comportent des mémoires de fichiers de données (MM1, MM2) pour des listes de cartes ou de codes inutilisables, des algorithmes de commande, des paramètres de commande et des mémoires-tampons de données de trafic.

9. Système de téléphone public selon les revendications 6 à 8, caractérisé en ce que ledit second bus sériel (BB2) est prévu pour l'échange de données traitées par lesdites mémoires de traitement étendues (MEX-I1, MEX-I2) et est activé par l'insertion de celles-ci.

10. Dispositif utilisé dans le système de téléphone public selon les revendications 1 à 9, caractérisé en ce qu'il comporte une pluralité d'unités de traitement modulaires (TAI1...TAIn) connectées en parallèle à au moins un bus sériel (BB1, BB2) et connectées, au moyen de sondes spécialisées (SUT, SGM, S2F), à des postes téléphoniques publics et des terminaux télématiques (U + I, U + IP, Tx3c, G + M, CCT, CDT, TT) commandées par le système ; et en ce que chaque unité de traitement modulaire comporte :
   - un microprocesseur (MP) avec un circuit de commande de validation d'opération (WD) du type chien de garde, sensible à une commande de redéclenchement et produisant une alarme vers le central (CEN) en l'absence de ladite commande,
   - un élément interrupteur (S1, S2) pour ledit bus sériel (BB1, BB2), activé par ledit circuit de commande de validation d'opération (WD) et par le programme ;
   - des circuits de comparaison (COM, D/A) pour une conversion analogique/numérique et vice-versa,
   - des circuits de communication (SCI) et de sélection (WV) d'unité modulaire, ledit circuit de communication (SCI) étant apte à reconnaître des messages adressés à l'unité associée, permettant la réception de ceux-ci, ledit circuit de sélection (WV) étant prévu pour éliminer tout autre message ayant une adresse différente,
   - un ensemble de blocs de mémoire (M1-M4) pour la mémorisation de programmes d'opérations, de compteurs, de données de système et de programmes pouvant être mis à jour,

- un premier et un second générateur de tonalité (GEN1, GEN2), respectivement à 425 Hz pour la tonalité du central et à 1000 Hz pour une fin de crédit,
- un interface (INB) pour une extension d'un bus intérieur (BI),
- une alimentation autonome (continue/continue),
- des voyants optiques d'opérations (L1-L3),

dans lequel au moins une unité de traitement modulaire (TAI1), opérant en tant que maître par rapport aux autres unités de traitement modulaires (TAI2...TAIn), est connectée, par l'intermédiaire d'un modem (MMOD) et d'une ligne téléphonique commutée (LC) ou spécialisée dans la transmission de données, à un central de chargement de données à distance et de concentration (TCS).

11. Dispositif selon la revendication 10, caractérisé en ce qu'au moins une unité de traitement modulaire (TAI1) et l'une ou plusieurs sondes spécialisées (SUT) associées à celle-ci sont prévues pour une connexion à des postes téléphoniques des types U + I, U + IP et Tx3c.

12. Dispositif selon la revendication 11, caractérisé en ce que chaque sonde spécialisée (SUT) comporte une pluralité d'unités d'interface (IU) pour une connexion chacune à un appareil téléphonique correspondant, chacune desdites unités d'interface étant sélectionnée par un multiplexeur (MUX) selon une commande de l'unité de traitement modulaire associée (TAI1...TAIn),telle que mémorisée dans une unité de verrouillage (LA) de ladite sonde et en ce que ledit multiplexeur reçoit un signal d'occupation (im) à partir d'un fil audio(b) connecté en dérivation,dans le cas de centraux électromécaniques,et en série,dans le cas de centraux numériques.

13. Dispositif selon la revendication 12, caractérisé en ce que ladite connexion série dudit fil audio (b) comporte un isolateur optique (OT) pour le passage vers ledit multiplexeur (MUX) d'un signal d'occupation reproduit.

14. Dispositif selon la revendication 10, caractérisé en ce qu'au moins une unité de traitement modulaire (TAIn-2, TAIn-1) et une ou plusieurs sondes spécialisées (SGM) associées à celle-ci sont prévues pour une connexion à des postes téléphoniques du type G + M.

15. Dispositif selon la revendication 14, caractérisé en ce que chaque sonde spécialisée (TAIn-2, TAIn-1) commande deux postes téléphoniques chacun au moyen de deux paires de fils, respectivement audio (a, b) et de signalisation (aˢ, bˢ).

16. Dispositif selon les revendications 10, 14 et 15, caractérisé en ce que ladite sonde spécialisée (SGM) comporte :

- un commutateur analogique (AS) déclenché par ladite unité de traitement modulaire (TAI) pour lui transférer un signal de sonnerie (ri) ;
- une mémoire-tampon d'extension (BU) pour étendre ledit bus intérieur (BI) de ladite unité de traitement modulaire pour ainsi mémoriser et envoyer à ladite unité de traitement modulaire les données suivantes : occupation de sélection (is), signalisation (ss), comptage (C12) et tonalité (425),
- une bascule (LA1) recevant de ladite unité de traitement modulaire les commandes suivantes : déconnexion (dis), inversion de polarité (ip), contournement (mp), transmission de tonalité (it), sélection de tonalité (st), occupation de sélection (is) et commande d'essai (te).

17. Dispositif selon les revendications 14 à 16, caractérisé en ce que ladite sonde spécialisée (SGM) comporte un ensemble de trois relais (R1-R3), respectivement pour une connexion, une dérivation de contournement et une insertion du circuit de génération de tonalité.

18. Dispositif selon la revendication 10, caractérisé en ce qu'au moins une unité de traitement modulaire (TAIn) et l'une ou plusieurs sondes spécialisées (S2F) associées à celle-ci sont prévues pour la connexion sur deux fils, de terminaux télématiques correspondants (TT).

19. Dispositif selon la revendication 18, caractérisé en ce que ladite sonde spécialisée (tain), comporte au moins un modem comprenant un point de connexion UART série/parallèle.

20. Dispositif selon la revendication 10, caractérisé en ce que ladite unité de traitement modulaire,agissant en tant que maître (TAI1),est connectée audit central de commande à distance et/ou de supervision et/ou de concentration de données (CEN),par l'intermédiaire de moyens de connexion (MMOD),comprenant un bus intérieur (MBI) connecté par l'intermédiaire d'un interface (IB) audit bus intérieur (BI) de ladite unité de traitement modulaire et constituant une extension de celle-ci, et des blocs de mémoire (MM1, MM2) connectés audit bus intérieur (MBI) desdits moyens de connexion (MMOD) pour une duplication de données desdites unités de traitement modulaires (TAI1...TAIn), en particulier des compteurs ; lesdites données étant prélevées desdites unités modulaires par l'intermédiaire d'un algorithme d'analyse d'interrogation continue.

21. Dispositif selon la revendication 20, caractérisé en ce que lesdits moyens de connexion (MMOD) comportent une matrice câblée (MMC) mémorisant en permanence un numéro téléphonique d'intervention pour des alarmes et un interface de lecture (CLL) pour ladite matrice câblée.

22. Dispositif selon les revendications 20 et 21, caractérisé en ce que lesdits moyens de connexion (MMOD) comportent en outre une ligne téléphonique (LC) connectée, par l'intermédiaire d'un interface de ligne (ILL), à un modem (MMOD) coopérant avec un point de connexion de contrôle sériel (UST).

23. Dispositif selon les revendications 20 à 22, caractérisé en ce que,sur ladite ligne téléphonique (LC), un circuit d'occupation de sélection (IMP), une sonde de sonnerie (SR) et une sonde de tonalité (S425) sont introduits et connectés audit bus intérieur (MBI) desdits moyens de connexion (MMOD) par l'intermédiaire d'un point de connexion d'entrée/sortie (I/O).

24. Dispositif selon les revendications 10 et 14, caractérisé en ce que lesdites sondes spécialisées (SGM) prévues pour une connexion à des postes téléphoniques du type G + M sont également aptes à commander des postes téléphoniques (CCT, CDT) à carte de paiement, à carte de crédit et à carte de débit, en ce que lesdites unités de traitement modulaires (TAI1...TAIn) sont connectées à deux bus de système (BB1, BB2) et en ce qu'au moins une mémoire de traitement étendue (MEX-I1, MEX-I2) est également connectée auxdits deux bus de système.

25. Dispositif selon la revendication 24, caractérisé en ce qu'il comporte deux mémoires de traitement étendues (MEX-I1, MEX-I2) interconnectées selon le mode maître/esclave.

26. Dispositif selon les revendications 24 et 25, caractérisé en ce que chaque mémoire de traitement étendue (MEX-I1, MEX-I2) comporte :
   - une logique de commande de microprocesseur (MCU),
   - un interface (IB1, IB2) pour une connexion avec lesdits deux bus de système (BB1, BB2),
   - des mémoires (MA) contenant les données associées aux cartes de crédit et de débit inutilisables et aux algorithmes de commande de crédit et de débit,
   - des mémoires (PM, ML) contenant les programmes de commande,
   - des mémoires-tampons de données de trafic (SPI, IIM, P1, P2).

27. Dispositif selon la revendication 26, caractérisé en ce que ladite logique de commande de microprocesseur (MCU) comporte un coprocesseur (CCPU) pour traiter un algorithme de cryptographie et une minuterie (TM) avec différents niveaux d'interruptions programmables.

28. Dispositif selon les revendications 24 à 27, caractérisé en ce que chaque mémoire de traitement étendue (MEX-I1, MEX-I2) comporte des blocs de mémoire de fichiers (MA) constitués de RAM dynamiques et en ce que lesdites mémoires de fichiers sont traitées en "pages".

29. Dispositif selon les revendications 10, 24 à 28, caractérisé en ce que chaque mémoire de traitement étendue (MEX-I1, MEX-I2) comporte un interface programmable sériel (SPI) pour une connexion auxdits moyens de connexion modem (MMOD) et ainsi audit central de commande et/ou de supervision et/ou de concentration de données.

Fig. 1

EP 0 230 283 B1

Fig. 2

EP 0 230 283 B1

Fig. 3

EP 0 230 283 B1

Fig.4

EP 0 230 283 B1

Fig. 5

EP 0 230 283 B1

# Fig. 6

EP 0 230 283 B1

WD

Q

K    CPU    DEC    $Bl_m$

TM    CCPU

MCU

MEX-I

PM    ML

GMM    MA

$m_1$

$m_8$

SPI    P1    P2

IIM    IIM    IB1    IB2

BB1    BB2